# EUROPEAN PATENT APPLICATION

(11) **EP 4 154 766 A1**
(43) Date of publication of application: **29.03.2023**
(21) Application number: 22192226.3
(22) Date of filing: 25.08.2022
(51) Int. Cl.: A47B 51/00

(54) **A WORKTOP UNIT**

(30) Priority: 28.09.2021 GB 202113877
(71) Applicant: The West Retail Group Limited, Barton-upon-Humber North Lincolnshire DN18 5RL (GB)
(72) Inventor: SELLARS, Mark, Barton-Upon-Humber, DN18 5RL (GB); ALLEN, Jacob, Barton-Upon-Humber, DN18 5RL (GB)
(74) Representative: Haseltine Lake Kempner LLP

(57) **Abstract**

A worktop unit (200) and a method (900) of controlling a worktop unit (200). The worktop unit comprises: a frame (210) configured to support a worksurface; and a leg (250) configured to support the frame, wherein the frame is movable relative to the leg between: a first position; and a second position having a greater elevation than the first position. The method comprises (902) moving the frame between the first position and the second position when a safety condition is satisfied.

## Description

### Technical Field

The present disclosure relates to furniture and is particularly, although not exclusively, concerned with a height-adjustable worktop unit for improved accessibility.

### Background

It is common for kitchens to have a worktop upon which appliances (e.g. a microwave oven) may be provided and upon which activities (e.g. food preparation) may be performed. Further, it is common for kitchens to have wall cabinets provided above the worktop for storing kitchen items (e.g. crockery).

Such worktops and wall cabinets are typically provided at standardised heights above the floor, based upon the reach and capabilities of a standing person. However, people vary and not all people, including those with certain disabilities, are able to stand or have typical reach or related capabilities.

### Statements of Invention

It would therefore be advantageous to provide furniture having improved accessibility in order to better accommodate those having differing reaches and capabilities. Additionally, it would be advantageous to provide kitchen furniture which is able to accommodate both those with certain disabilities and those without, whether by accessibility, versatility or improved functionality or ergonomics.

To better address one or more of the above, the present disclosure provides the following aspects.

According to an aspect of the present disclosure, there is provided a method of controlling a worktop unit, the worktop unit comprising: a frame configured to support a worksurface; and a leg configured to support the frame, wherein the frame is movable (e.g. continuously or incrementally) relative to the leg between: a first position; and a second position having a greater elevation than the first position (e.g. relative to a floor when installed), the method comprising moving the frame between the first position and the second position (e.g., moving the frame from the first position to the second position, from the second position to the first position, or from any position to any other position).

The method may comprise determining whether a move condition is satisfied. The move condition may comprise a spatial and/or safety condition. The safety condition may be a condition for avoiding collision between the worktop unit and its environment once installed (e.g. between the frame and an object provided beneath the frame or between a worksurface secured to the frame and an object provided above the worksurface) whilst moving between the first and second positions. The environment may include objects provided above and/or below the worktop unit. The safety condition may be a crush condition or a crush event (e.g. so as to prevent the worktop unit crushing another object or a user).

The method may comprise: receiving an instruction to move the frame towards (e.g., to) the first position (e.g. when the frame is in the second position, or in an elevated position above the first position); determining a position of the frame relative to the leg so as to determine a remaining travel span towards (e.g. to) the first position; and/or receiving a signal from a sensor describing a separation between an underside of the frame and an object provided beneath the frame.

If it is determined that the separation between the underside of the frame and the object provided beneath the frame is greater than the remaining travel span towards the first position, the method may comprise moving the frame towards the first position. The instruction may be an instruction to move the frame to the first position. The method may comprise moving the frame to the first position.

If it is determined that the separation between the underside of the frame and the object provided beneath the frame is less than the remaining travel span towards the first position, the method may comprise moving the frame towards the first position to an extent that the frame does not contact the object (e.g. moving the frame to a position which is an incremental distance short of the object). The instruction may be an instruction to move the frame to the first position, and the method may comprise moving the frame towards the first position (e.g. but not to the first position). Alternatively, the method may comprise not moving the frame.

The method may comprise: receiving an instruction to move the frame towards the second position; determining a position of the frame (e.g. relative to the leg) so as to determine a remaining travel span towards the second position; and/or determining a separation between an upper surface of the worktop unit and an object provided above the worktop unit.

If it is determined that the separation between the upper surface of the worktop unit and the object provided above the worktop is greater than the remaining travel span towards the second position, the method may comprise moving the frame towards the second position. The instruction may be an instruction to move the frame to the second position, and the method may comprise moving the frame to the second position.

If it is determined that the separation between the upper surface of the worktop and the object provided above the worktop is less than the remaining travel span towards the second position, the method may comprise moving the frame towards the second position to an extent that the frame does not contact the object. For example, the method may comprise moving the frame towards the second position to an incremental distance short of the object.

Determining a separation between an upper surface of the worktop unit and an object provided above the worktop unit may comprise receiving a signal from a sensor describing a separation between an upper surface of the worktop unit and an object provided above the worktop unit.

The method may be a method of controlling the worktop unit and a height-adjustable wall cabinet, the worktop unit being installed beneath the wall cabinet such that the worktop unit and the wall cabinet may have overlapping travel spans (e.g. the maximum elevation of the uppermost surface of the worktop unit may be greater than the minimum elevation of the lowermost surface of the wall cabinet or shelving unit thereof) or alternatively travel spans which nearly overlap, such that an object placed on the worktop unit may be capable of interacting with the shelving unit in certain positions.

The method may comprise receiving an instruction to move one of the wall cabinet and the worktop unit between a first position and a second position, and: receiving a signal describing a position of the other of the wall cabinet and the worktop unit; and/or determining a position of the other of the wall cabinet and the worktop unit; and/or moving the other of the wall cabinet and the worktop unit.

Determining a separation between an upper surface of the worktop unit and an object provided above the worktop unit may comprise receiving a signal describing a position of the wall cabinet.

The method may comprise: receiving an instruction to move the worktop unit and the wall cabinet in a same direction; and/or moving both the worktop unit and the wall cabinet at same rate in the same direction.

If it is determined that the separation between the upper surface of the worktop and the wall cabinet is less than the remaining travel span towards the second position, the method comprises moving the wall cabinet (e.g. the shelving unit) upwards, to a more elevated position, towards a retracted position, away from the worktop unit, and/or towards the first position of the wall cabinet.

The method may comprise: receiving an instruction to move the wall cabinet towards the worktop unit (e.g. towards the wall cabinet's second position); determining a position of the wall cabinet so as to determine a remaining travel span towards the worktop unit; determining a separation between an upper surface of the worktop unit and a lower surface of the wall cabinet. If it is determined that the separation between the upper surface of the worktop and the lower surface of the wall cabinet is less than the remaining travel span towards the worktop unit, the method may comprise: moving the worktop unit downwards/away from the wall cabinet/towards its first position; and/or moving the wall cabinet downwards/towards the worktop unit/towards its first position.

When the item of furniture is the wall cabinet, the method may comprise: receiving an instruction to move the shelving unit towards the first position; determining a position of a door of the cabinet; and in response to determining that a door of the cabinet is open, moving the shelving unit towards the first position (e.g. from the second position to the first position); or in response to determining that a door of the cabinet is closed, not moving the shelving unit. This may prevent objects (e.g. a user's fingers or a kitchen utensil) from becoming squashed between the shelving unit and the carcass.

When the item of furniture is the wall cabinet, the method may comprise: receiving an instruction to move the shelving unit towards (e.g. to) the second position; determining a position of the shelving unit so as to determine a remaining travel span towards the second position; determining a distance to an object provided beneath the shelving unit (e.g. receiving a signal from a sensor describing a separation between an underside of the shelving unit and an object provided beneath the shelving unit); moving the shelving unit towards the second position to an extent that the shelving unit does not collide with the object.

When the object comprises a second item of height-adjustable furniture (e.g. a worktop unit) or an object provided thereupon, the method may comprise: determining a distance to the second item of height-adjustable furniture beneath the shelving unit or an object provided thereupon; and transmitting an instruction to adjust the height of the second item of height-adjustable furniture. This may be particularly useful if the wall cabinet and the second item of height-adjustable furniture have overlapping travel spans or nearly overlapping travel spans (e.g. travel spans which are within 100 mm or 10 mm of one another).

The method may comprise: detecting a deceleration of the item of furniture; and reversing the direction of motion of the shelving unit e.g. for one second.

According to another aspect of the present disclosure, there is provided a controller. The controller may be configured to perform any method of the previous aspect. The controller may be configured to control one or more items of height-adjustable furniture, e.g. wherein the items of furniture have overlapping travel spans or travel spans which nearly overlap. This aspect may form part of and/or be used in conjunction with any other aspect.

According to another aspect of the present disclosure, there is provided a worktop unit for a kitchen, the worktop unit comprising: a frame configured to support a worksurface; and a leg configured to support the frame, wherein the frame is movable relative to the leg between: a first position; and a second position having a greater elevation than the first position.

The leg may comprise an actuator mechanism. The leg may comprise a housing (e.g. a housing for housing the actuator mechanism). The actuator mechanism may be configured to support the frame. The actuator mechanism may be movable relative to the housing, the actuator mechanism being configured to move the frame relative to the housing.

The actuator mechanism may comprise a slide mechanism configured to slide within a channel of the housing. The actuator mechanism may comprise an actuator, the actuator being anchored at a first end to an attachment point of the housing and at a second end attached to an attachment point of the slide mechanism.

In the first position, the frame may rest upon the leg. In the first position, the frame may rest upon an upper surface of the housing of the leg. The upper surface of the housing of the leg may be not movable relative to a floor upon which the leg is provided. The housing (e.g. an upper end of the housing) may be fixable to a wall, e.g. so as to sit flush against the wall.

In the second position, the frame may be raised above the leg.

The frame may be movable relative to the leg in a substantially vertical plane. The leg may extend in a first plane (e.g. a vertical plane when installed), and the frame may extend in a perpendicular plane (e.g. a horizontal plane when installed). In an installed configuration, the frame may be configured to support a worksurface in a horizontal plane. The worktop unit may comprise the worksurface.

The plane of the leg may intersect the plane of the frame only at the rear edge of the frame (e.g. the leg may not be centred beneath the frame, such that without the leg being fixed to a wall, the worktop unit may topple). The legs and the frame may form a cross section (e.g. a transverse cross section) comprising an inverted L-shape. The leg may be provided at a rear or side of the worktop unit such that the leg provides a space underneath the frame. The worktop unit may comprise a plurality of legs. The plurality of legs (e.g. all of the legs) may be provided in the same plane (e.g. substantially the same plane).

The worktop unit may comprise a length dimension, a depth dimension, and/or a height dimension. The plurality of legs may be spaced apart along the length dimension. Each leg may extend along a height dimension. Each leg may not extend substantially along a depth dimension. The worktop unit may not comprise any legs other than at the rear of the unit. The worktop unit may thereby comprise a large space beneath a worktop provided thereupon, e.g., such that a user may sit with their legs and/or a wheelchair beneath the worktop, without obstruction.

In an installed configuration, each of the plurality of legs may be attachable to a wall at the rear of a worktop against which the worktop is provided.

The worktop unit may comprise a sensor (e.g. a sensor strip provided at a front edge or underside of the frame) configured to detect an environment beneath the worktop unit. The worktop unit may comprise a sensor (e.g. a sensor strip provided at a rear edge of the worksurface) configured to detect an environment above the worktop unit. The sensor may be operated (e.g., only operated) when the worktop unit is in a position other than the first position and/or only when the worktop unit is travelling toward the first position. The sensor may not be operated when the worktop unit is travelling toward the second position.

The worktop unit may comprise a sensor (e.g. a sensor strip provided at a front edge or underside of the frame) configured to detect an acceleration (e.g., a deceleration) of the frame. The sensor may be operated (e.g. only operated) when the frame is travelling between the first position and the second position (e.g., only when the frame is travelling towards the first position). The sensor may not be operated when the worktop unit is travelling towards the second position.

The worktop unit may be in communication with (e.g. may comprise) a controller.

The controller may be configured to permit motion of the frame between the first position and the second position to an extent that the frame does not collide with its environment.

The worktop unit may be provided beneath an item of height-adjustable furniture, e.g. such that the environment of the worktop unit includes a height-adjustable wall cabinet. The worktop unit and the wall cabinet may have overlapping travel spans, e.g. a most elevated position of the frame may coincide with a least elevated or most lowered position of the shelving unit of the wall cabinet.

The controller may be configured to permit motion of the frame between the first position and the second position to an extent that the frame does not collide with the item of height-adjustable furniture.

The worktop unit may be actuatable remotely, e.g. actuatable by voice command.

According to an aspect of the present disclosure, there is provided a kitchen furniture suite (e.g. a number of installed kitchen furniture units) comprising a worktop unit according to the previous aspect. The kitchen furniture suite may comprise the worktop unit and the wall cabinet, e.g. the worktop unit and the wall cabinet having overlapping or nearly overlapping travel spans.

According to an aspect of the present disclosure, there is provided a wall cabinet for attachment to a wall (e.g. in a kitchen), the wall cabinet comprising a cabinet carcass fixable to the wall of a kitchen; and a shelving unit housable within the carcass, wherein the shelving unit is movable relative to the carcass between: a first position in which the shelving unit is housed within the carcass; and a second position in which the shelving unit extends at least partially beneath the carcass. The wall cabinet may be a height-adjustable wall cabinet.

The carcass may comprise two side panels, a top panel, a back panel and a door. The carcass may not comprise a base panel. The carcass may be fixed to a wall.

In the first position, a bottom shelf of the shelving unit may form a bottom surface or base of the wall cabinet. In the first position, the shelving unit may be accessible by means of a door of the carcass. For example, a standing user may open the door in order to access the shelving unit. In the second position, at least a portion of the shelving unit (e.g. a bottom shelf thereof) may be accessible beneath the carcass.

The shelving unit may be slidable or translatable relative to the carcass. In an installed configuration, the shelving unit may be linearly slidable relative to the carcass in a substantially vertical plane.

At least one of (e.g. both) the carcass and the shelving unit may comprise a means for permitting a slidable connection therebetween, such one or more slide rails. The slide rail may be configured to cooperate with a corresponding component on the other of the carcass and the shelving unit. In an installed configuration, the or each slide rail may be provided substantially vertically.

The shelving unit may comprise a bottom shelf and one or more further shelves. The bottom shelf may protrude forward beyond the further shelf or shelves. The bottom shelf may protrude forward beyond a remainder of the shelving unit, such that the bottom shelf may project furthest from the wall and form a forwardmost surface of the shelving unit. The bottom shelf of shelving unit may form a base or bottom surface of the wall cabinet in the first position.

The shelving unit may comprise a ceiling panel. The ceiling panel may be configured to restrict the height of items placed in the shelving unit e.g. when in the second position.

The shelving unit may comprise a back panel of which a portion may be inclined to a remainder of the back panel. In an installed configuration the inclined portion may be inclined to the vertical, such that a space is provided to its rear.

The shelving unit may comprise two side panels. Shelf-engaging apertures may be provided in the side panels.

The wall cabinet may comprise an actuator configured to move the shelving unit between the first position and the second position. At a first end, a body of the actuator may be fixed relative to the wall or to the carcass. At a second end, an arm of the actuator may be attached to the shelving unit.

The arm of the actuator may be attached to a bottom shelf of the shelving unit. The actuator may be attached to the shelving unit only at the bottom shelf. For example, the actuator may be attached to the shelving unit at only a single point.

In an installed configuration, the actuator (e.g. its body) may be provided between a back panel of the shelving unit and a back panel of the carcass. For example, the actuator may be housed between the sloped portion of the back panel and the back panel of the carcass. The arm of the actuator may be provided between the back panel of the shelving unit and the back panel of the carcass. The actuator may be fixed relative to a wall upon which the wall cabinet is provided.

In the first position, the shelving unit may be accessible by means of a door of the carcass.

The wall cabinet may additionally comprise or be in communication with a sensor configured to detect a position of a door of the cabinet. The sensor may for example comprise an optical sensor or a pressure sensor. The sensor may be configured to detect a position of the hinges. The sensor may be provided in the hinges. The sensor may be in communication with a controller. The wall cabinet may be movable towards the first position when the door is in an open position (e.g. only when the door is fully open).

The wall cabinet may additionally comprise or be in communication with a sensor configured to detect an environment beneath the shelving unit. The sensor may be configured to detect an object provided beneath the shelving unit (e.g. so as to prevent the shelving unit contacting the object). The sensor may comprise a sensor or sensor strip provided on an underside of the shelving unit. The sensor may comprise a proximity detector. The sensor may be in communication with a controller. The controller may be configured to control the wall cabinet.

The wall cabinet may additionally comprise or be in communication with a sensor configured to detect an acceleration of the shelving unit, e.g. a gyroscope. The sensor may be configured to detect a contact between the shelving unit and its environment.

The wall cabinet may be in communication with a controller configured to control motion of the shelving unit. The wall cabinet may comprise a controller.

The wall cabinet may be actuatable remotely. The wall cabinet may be actuatable by voice control. The wall cabinet may be actuatable from the first position to the second position by a user issuing only a single "down" command. The wall cabinet may be actuatable from the second position to the first position using a repeated or continual "up" command. For example, a single "up" command may move the shelving unit only an incremental distance.

According to another aspect of the present disclosure, there is provided a method of controlling an item of height-adjustable furniture (e.g. the wall cabinet), the method comprising moving the item of height-adjustable furniture between the first position and the second position.

According to another aspect of the present disclosure, there is provided a worktop unit for a kitchen, the worktop unit comprising: a frame configured to support a worksurface; and a plurality of legs configured to support the frame, wherein the frame is movable relative to the leg between: a first position; and a second position having a greater elevation than the first position, wherein each leg of the plurality of legs is configured to be attached to a wall, such that all legs of the worktop unit are substantially coplanar. In this aspect of the invention, there are no legs other than at the back of the unit which might obstruct a wheelchair user's chair or the legs of a seated user. This aspect may form part of and/or be used in conjunction with any other aspect.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, each aspect above may be combined with at least one other aspect.

### Brief Description of Drawings

For a better understanding of the present invention, and to show more clearly how it may be carried into effect, reference will now be made, by way of example, to the accompanying drawings, in which:
Fig. 1 is a perspective view of a wall cabinet according to one embodiment of the present disclosure in a first position;
Fig. 2 is a sectional side view through a bisecting plane of the wall cabinet of Fig. 1 in the first position;
Fig. 3 is a perspective view of a shelving unit of the wall cabinet of Fig. 1;
Fig. 4A is a transparent perspective view of a bottom shelf of the shelving unit of Fig. 3;
Fig. 4B is a perspective view of two pairs of slide rails;
Fig. 4C is a perspective view of an actuator;
Fig. 5 is a perspective view of the wall cabinet according to Fig. 1 shown in a second position;
Fig. 6 is a perspective view of a worktop according to another embodiment of the present disclosure in a first position;
Fig. 7 is a perspective view of a leg of the worktop of Fig. 6;
Figs. 8A and 8B are perspective view of the housing and slide channel assembly of the leg of Fig. 7;
Fig. 9 is a flowchart of a method of controlling furniture according to an embodiment of the present disclosure; and
Fig. 10 is a controller according to another embodiment of the present disclosure.

Throughout the drawings, like reference numerals are used to refer to indicate like features.

### Detailed Description

### Wall cabinet

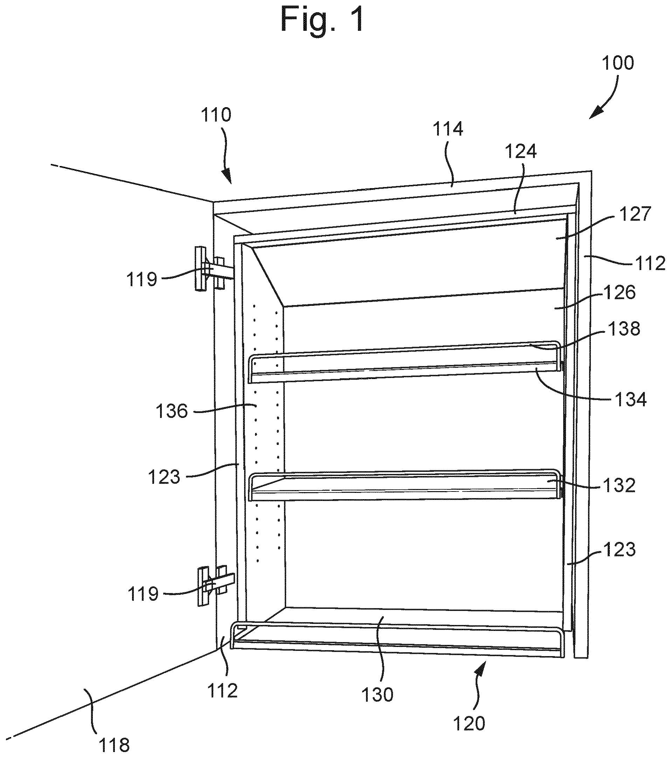

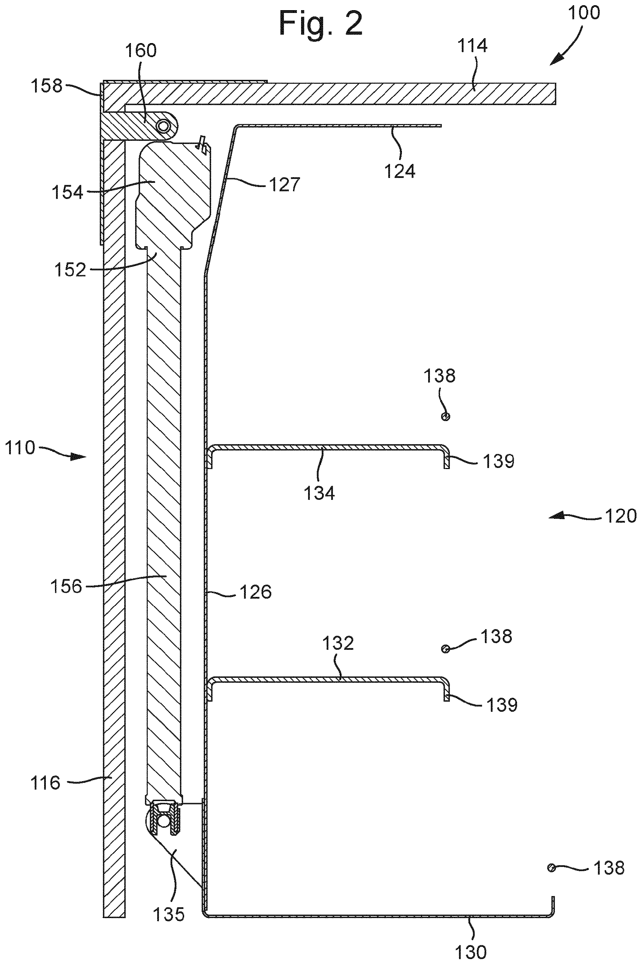

With reference to Figs. 1, 2 and 3, a wall cabinet 100 comprises a cabinet carcass 110 and a shelving unit 120. In the orientation shown in Fig. 1, it will be understood that the front of the cabinet 100 is nearest to the viewer in the plane of the page, and the back of the cabinet is furthest away from the viewer in the plane of the page. Similarly, in Fig. 2, the front of the cabinet 100 faces the right hand side of the page, and the back of the cabinet faces the left of the page.

Fig. 1 shows the wall cabinet 100 in the first position, in which the shelving unit 120 is housed within the carcass 110. The carcass 110 comprises side panels 112, a top panel 114, a back panel 116 (Fig. 2) and a door panel 118. The door panel 118 is hingedly attached to one side panel 112 by hinges 119, so as to be openable and closable (e.g. about a vertical axis). The panels 112, 114, 116, 118 collectively define a cuboidal space therebetween. For example, each panel 112, 114, 116, 118 is provided substantially perpendicularly to an adjacent panel.

In the embodiment shown in Figs. 1, 2 and 5, the cabinet carcass 110 does not comprise a base panel. The panels 112, 114, 116, 118 are typically made from timber, chipboard or MDF, but it will be understood that other suitable materials may be used. In the first position, the wall unit 100 has the advantage of appearing substantially similar to a typical, fixed wall unit and the door 118 may be opened by a user in a conventional manner to access any goods stored inside.

The carcass 110 is fixedly attachable to a wall, such as a kitchen wall, for example by means of a number of brackets (not shown) attached to the carcass and the wall by means of screws (not shown). The carcass 110 may thereby be fixed in position at a particular height relative to the wall. The brackets may attach the back panel 116 to the wall, such that the back panel 116 and the rear surfaces of the side panels 112 and top panel 114 may sit flush against the wall.

In embodiments not shown, the carcass 110 may not comprise a back panel 116, and the brackets may thereby attach the top and side panels 112, 114 of the carcass 110 to the wall. Further, it will be understood that, , additional or alternative means suitable for fixedly attaching the carcass 110 to a wall may be used in place of or in addition to one or more brackets.

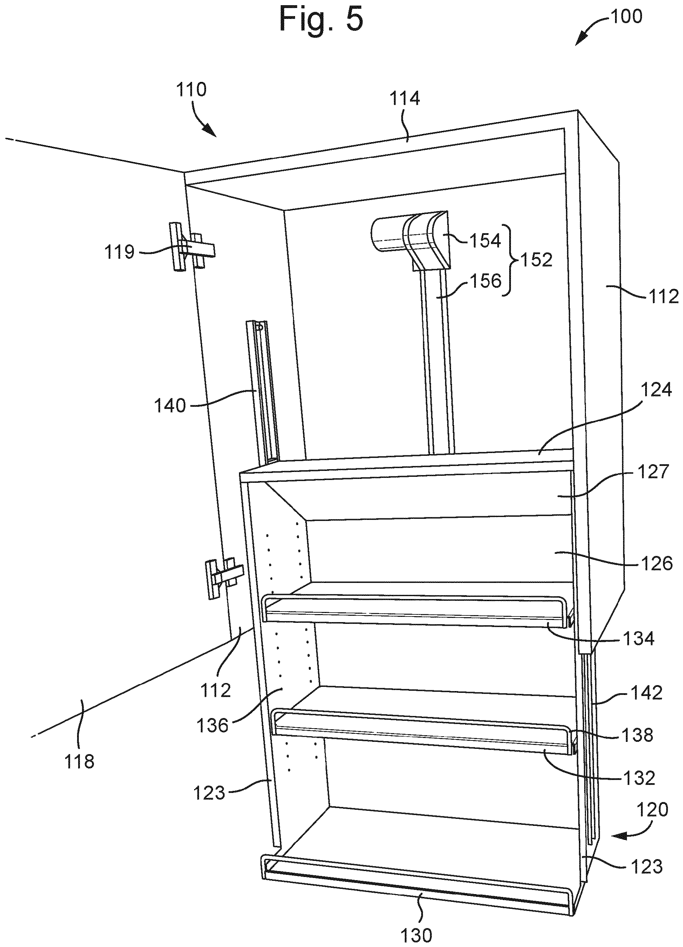

Each side panel 112 of the carcass 110 comprises, on its major internal surface, a slide rail 140 (Fig. 5). The slide rail 140 extends substantially vertically down each side panel 112. The slide rail 140 may be provided down a midline of the panel 112, or alternatively away from the midline such as two-thirds of the way to the back of each side panel 112. The slide rail 140 may not comprise an end stop (e.g. an end stop at its top end, or an end cap at either end). As will be described below, the slide rails 140 are configured to cooperate with corresponding features 142 provided on the shelving unit 120 so as to permit a sliding connection between the carcass 110 and the shelving unit 120.

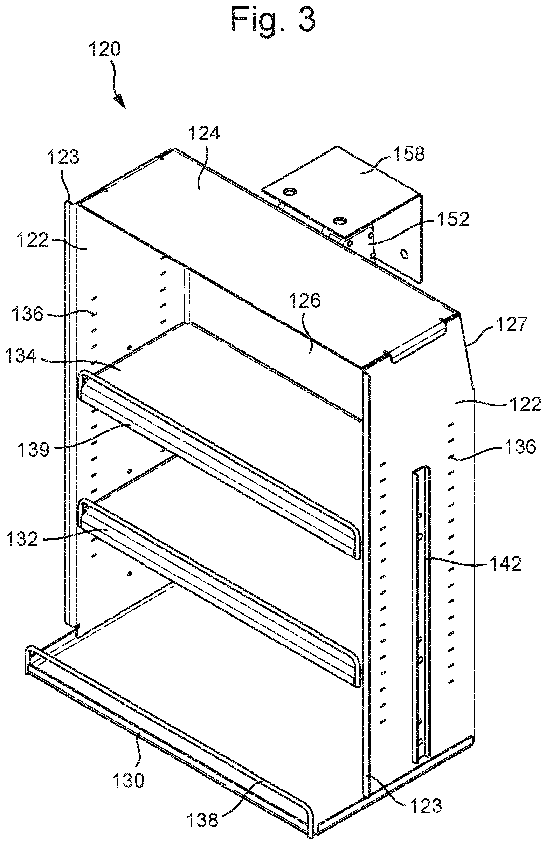

With reference to Figs. 2 and 3, the shelving unit 120 comprises side panels 122, a ceiling panel 124 and a back panel 126. The shelving unit 120 additionally comprises a bottom shelf 130 and a number of further shelves 132, 134. In the example shown in Figs. 2 and 3, although the shelving unit 120 has two further shelves, it will be understood that the number of further shelves may be varied according to the requirements of the user.

Each of the side panels 122 and ceiling panels 124 may be substantially planar. In the illustrated embodiment, the side panels 122, ceiling panel 124 and back panel 126 collectively define a substantially cuboidal space therebetween. For example, each panel 122, 124, 126 is provided substantially perpendicular to an adjacent panel 122, 124, 126. A cuboidal space may be defined as a space having six flat faces and all angles between the faces are right angles.

On an outer lateral surface of each side panel 122 is provided a slide rail 142 (Fig. 3). Each slide rail 142 extends substantially vertically down the corresponding side panel 122. Each slide rail 142 may be located approximately down the midline of each side panel 122. Each slide rail 142 may not comprise an end stop (e.g. an end stop at either end and/or an end stop at a lower end). Each slide rail 142 may comprise an end stop at an upper end only.

The slide rail 140 of the carcass 110 and the slide rail 142 of the shelving unit 120 are configured to cooperate with one another so as to guide motion of the shelving unit 120. The slide rails 140, 142 may permit a sliding connection between the shelving unit 120 and the carcass 110, such that when installed the shelving unt 120 may slide linearly in a vertical plane relative to the carcass 110. For example, the rails 140, 142 may be configured to prevent rotation of the shelving unit 120 relative to the carcass 110. Whilst the sliding connection between the carcass 110 and the shelving unit 120 has been described in terms of rails 140, 142, it will be understood that alternative means may be provided, such as a wheel in rail or lead screw or rack and pinion arrangement (not shown).

At the front edge of each side panel 122, there is provided a fold or flange 123 (Fig. 3). The fold performs the purpose of preventing objects, e.g. fingers or other body parts or items of clothing or kitchen apparatus, from becoming trapped between the shelving unit 120 and the carcass 110 during movement of the shelving unit 120. The fold may extend the full length of each side panel, such that the mechanisms of the slide rails 140, 142 may not be visible or accessible from the front of the wall cabinet 100.

As shown in Fig. 2, the back panel 126 of the shelving unit 120 may comprise a sloped portion towards (e.g. at) its top end. For example, a majority of the back panel 126 may be flat and/or planar such that it may form a vertical rear surface of the shelving unit 120 when installed. Towards a top end, the back panel 126 may comprise a sloped portion 127 being inclined to the remainder of the back panel 126 such that a discontinuity in gradient is formed along a horizontal line of the back panel 126. In other words, the back panel 126 may comprise a lower portion which is substantially flat and planar, and an upper portion which is substantially flat and planar but provided at an angle to the lower portion. Accordingly, the back panel 126 of the shelving unit 120 may comprise an upper portion which is inclined to the vertical once installed.

Similarly, as shown in Fig. 3, the side panels 122 of the shelving unit 120 may comprise a tapering in dimensions towards (e.g. at) their top. The side panels 122 may thereby comprise a complex shape (e.g. not a simple rectangular shape). For example, a majority of each side panel 122 may comprise a rectangular shape. At a top end, each side panel 122 may comprise a right-angled trapezoid, the sloped side of the trapezoid being provided at the rear edge of the side panel 122 and/or the right-angled side of the trapezoid being provided at the front edge of the side panel 122. The top edge of each side panel 122 may thereby be narrower than the bottom edge of each side panel 122. The tapering of the side panels 122 may be configured to conform to the sloped portion 127 of the back panel 126, such that the side panels 122 and the back panel 126 may form an edge where they meet.

Accordingly, when the shelving unit 120 comprises tapered side panels 122 and a sloped back panel 126, the shelving unit 120 may comprise a smaller depth dimension at its top than at its midpoint and/or bottom.

The side panels 122 and the back panel 126 may thereby be shaped so as to provide a cavity or space behind the shelving unit 120 once installed in the carcass 110. For example, the side panels 122 and the back panel 126 may be tapered and sloped respectively so as to form a triangular-prismatic space behind a top of the shelving unit 120. The triangular prismatic space may be configured (e.g. shaped and sized) so as to accommodate, when the shelving unit 120 is in the first position, between the carcass 110 and the shelving unit 120, an actuator means 150 (described later).

The shelves 130, 132, 134 are provided substantially horizontally between the side panels 122 and the back panel 126. The shelves 132, 134 are supported by the side panels 122 by means of apertures 136 provided in the side panels 122, into which cooperating features of the shelves may be inserted so as to support the shelves 132, 134. The shelves 130, 132, 134 are configured to support and hold goods placed thereon for storage.

Each of the shelves 130, 132, 134 may comprise a front bar 138 which extends, from the front corners of each shelf 130, 132, 134, above the horizontal surface and front edge of the respective shelf. The front bar 138 is configured to retain any items placed on the shelf, so as to reduce the likelihood of the items falling off the shelf during motion of the shelving unit 120. Further, the front bars 138 may perform the purpose of reducing the likelihood of (e.g. preventing) fingers, other body parts or other items from becoming trapped or pinched during motion (e.g. retraction) of the shelving unit 120.

Each of the two further shelves 132, 134 comprises a downwardly extending flange 139 (e.g. on a side of the shelf 132, 134 opposite to that of the front bar 138). The flange 139 extends from the front edge of each shelf perpendicularly below the major horizontal surface of the respective shelf. For example, the flange may extend away from the front bar 138 provided on the opposite side of the front edge of the shelf. The front flanges 139 may perform the purpose of reducing the likelihood of (e.g. preventing) fingers, other body parts or other items from becoming trapped or pinched during motion (e.g. opening) of the shelving unit 120.

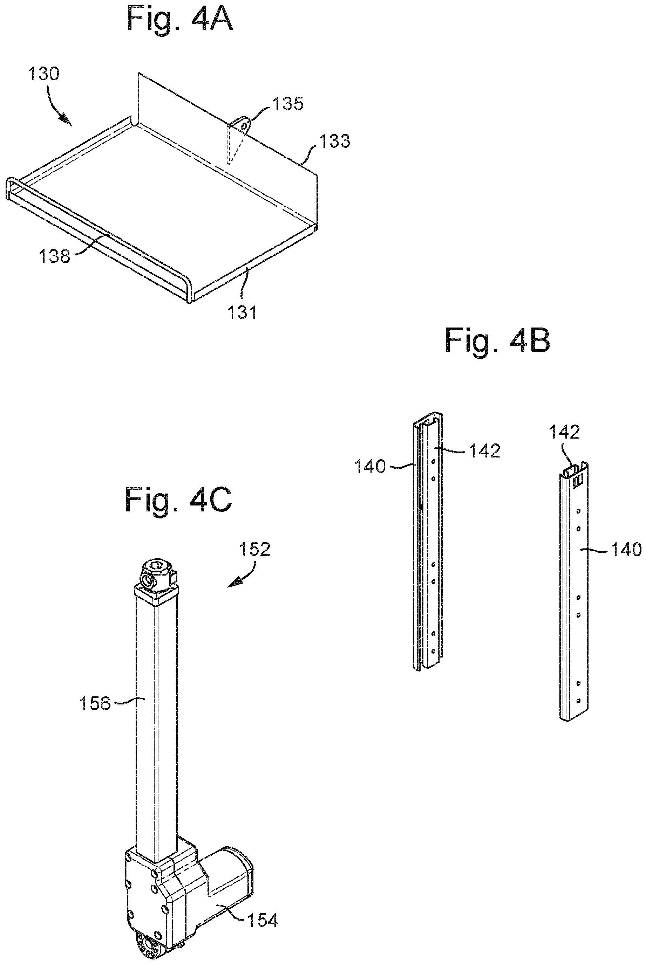

Fig. 4A shows a perspective transparent view of the bottom shelf 130. The bottom shelf 130 comprises a flanged perimeter 131, in which a flange extends perpendicularly away from the major surface at each edge of the shelf 130. The flange 133 provided at the rear of the shelf 130 may be substantially larger (e.g. extend substantially further) than the other flanges. An attachment point 135 may be provided on the rear surface of the rear flange 133. The attachment point 135 may be configured to receive an arm 156 of an actuator (described below) such that the actuator 152 may be able to act on the bottom shelf 130.

The bottom shelf 130 (Fig. 4) forms a base or bottom surface of the shelving unit 120. The bottom shelf 130 may not be supported by the side panels 122. For example, the side panels 122 and the back panel 126 of the shelving unit 120 may sit within and be welded to the flanged perimeter 131 of the bottom shelf. The bottom shelf 130 may thereby support (e.g. bear the weight of) the shelving unit 120, the bottom shelf 130 being supported by the actuator.

As shown in Figs. 2 and 3, the bottom shelf 130 is deeper (e.g. in the front/back direction) than the side panels 122, the ceiling panel 126 and, when present, the shelves 132, 134. The bottom shelf 130 thereby protrudes forward, beyond the shelves 132, 134, and the front surfaces of each of the side panels 122 and the ceiling panel 126. For example, the bottom shelf 132 may comprise a depth dimension being greater than that of the shelves 132, 134 and the side panels 122 by an amount substantially equal to the depth dimension of the hinges 119 when installed on the side panels 112 which attach the door 118 to one of the side panels 114.

The bottom shelf 130 may thereby comprise dimensions being substantially equal to the internal dimensions of the carcass 110, including the top panel 116, such that the bottom shelf 130 may effectively form a base or bottom surface of the wall cabinet 100 when in the first position shown in Fig. 1.

Extending from the top edges of the back panel 126 and the side panels 122 is the ceiling panel 124. The ceiling panel effectively ensures that, when the shelving unit 120 is in the second position (described later), items cannot be placed within the shelving unit 120 which may prevent the shelving unit 120 from shutting or may be crushed in the second position. For example, the ceiling panel 124 creates a height restriction which prevents objects of excessive height being stored in the shelving unit 120.

The shelving unit 120 may be made from metal, however it will be understood that alternative suitable materials may be used.

The shelving unit 120 is housable within the cabinet carcass 110. For example, the shelving unit 120 is dimensioned such that there is a small clearance between the external dimensions of the shelving unit 120 and the internal dimensions of the carcass 110. For example, as shown in Fig. 2, the depth of the shelving unit 120 is smaller than the depth of the carcass 110.

Similarly, the shelves 130, 132, 134, back panel 126 and ceiling panel 124 of the shelving unit 120 may have a width dimension which is narrower than the corresponding dimensions of the carcass 110 so as to allow a small clearance therebetween.

A front-back dimension of the side panels 122 may be smaller than the corresponding dimension of the side panels 112 of the carcass 110 in order to accommodate the hinges 119 of the carcass 110 and/or the actuator means 150.

The wall cabinet 100 comprises an actuator means 150 configured to control the motion of the shelving unit 120 relative to the carcass 110. The actuator means 150 is configured to control the motion continuously between the first position and the second position. In the embodiments shown in Figs. 2, 4C and 5, the actuator means 150 comprises a motorised linear actuator 152 which, as will be described later, may be controlled remotely. However, it will be understood that alternative actuator means which are suitable for the present use may be used.

The actuator 152 (Fig. 4C) comprises a body 154 and an arm or push tube 156. The body 154 of the actuator 152 is fixedly attached to the wall behind the carcass 110. For example, the body 154 of the actuator may be fixedly attached to the wall behind the carcass by means of a bracket 158 (Fig. 2) which is fixedly attached to the wall and comprises a limb 160 (Fig. 2) which extends through an opening in the carcass 110, the body 154 being fixedly attached to the limb 160. Accordingly, the carcass 110 may be fixedly attached to the wall, and the actuator means 150 may be fixedly attached to the wall, such that the actuator acting on the shelving unit 120 may move the shelving unit 120 relative to the wall and thus relative to the carcass 110.

A distal end of the arm 156 may be attached to the shelving unit 120, such that the actuator 152 is configured to act upon the shelving unit 120 so as to move the shelving unit 120 (e.g. relative to the wall and thus the carcass 110). In particular, the arm 156 may be provided in a vertical plane. For example, the arm 156 may be provided substantially parallel with the slide rails 140, 142 of the carcass 110 and the shelving unit 120. The actuator 152 and the rails 140, 142 may thereby cooperate to allow the shelving unit 120 to slide linearly (e.g. vertically) relative to the carcass 110.

The distal end of the arm 156 may be attached to the bottom shelf 130 of the shelving unit 120, in particular the attachment point 135. For example, the distal end of the arm 156 may be attached only to the bottom shelf 130. The actuator 152 may thereby act on the shelving unit 120 by acting on the bottom shelf 130, to which the remainder of the shelving unit 120 is attached.

Accordingly, the actuator 152 may be configured to bear the load of the shelving unit by means of the attachment point 135 of the bottom shelf 130. Similarly, the bottom shelf 130 may be configured to bear the load of the shelving unit 120 by means of the remainder of the shelving unit 120 sitting on, and being attached to, the bottom shelf. The slide rails 140, 142 may prevent rotation of the shelving unit about the attachment point 135 of the bottom shelf 130.

The slide rails 140, 142 (Fig. 4B) of the carcass 110 and the shelving unit 120 may be configured to permit a travel span of the shelving unit 120 which is sufficient to allow access to all of the shelves 130, 132, 134 of the shelving unit (e.g. with the door 118 in a closed position). In a preferred example, the travel span of the shelving unit 120 is at least as long as the height of the shelving unit 120. For example, in the second position, the ceiling panel 126 of the shelving unit 126 may be level with the underside of (e.g. the side panels 112 of) the carcass 110.

In a particular example, the shelving unit 120 is 684 mm tall and 544 mm wide, the bottom shelf is 299 mm deep (excluding attachment point) and the further shelves are 205 mm deep. The tapered portion of the side panels comprises a cutaway right-angled triangle of 130 mm height and 25 mm depth. The travel span of the actuator is up to 880 mm.

Although Fig. 5 shows the shelving unit 120 in the second position with the door 118 open, it should be understood that it may not be necessary for the door to be open in order for the wall unit 100 to be in the second position. For example, it may not be necessary for the door 118 to be open in order to move the shelving unit 120 from the first position towards (e.g. to) the second position. However, it may be necessary for the door 118 to be open for the shelving unit 120 to move from the second position towards (e.g. to) the first position.

The shelving unit 120 may comprise a sensor (not shown) (e.g. at least one sensor or multiple sensors). The sensor may be configured to detect the surroundings of the wall cabinet 100, for example so as to prevent the shelving unit 120 from colliding with any nearby objects when it moves from the first position towards the second position or vice versa. The sensor may comprise a proximity detector, configured to detect a separation or distance between the bottom shelf 130 and an object provided beneath the wall unit 100, such as an appliance or a countertop. The sensor may be provided on a lowermost surface of the shelving unit 120. For example, the sensor may be provided on the underside of the bottom shelf 130, as it may be the bottom shelf which is most likely to collide with another object. Additionally or alternatively, a sensor may be provided on an upper surface of the bottom shelf 130.

In certain examples, when the wall cabinet is provided above an adjustable-height worktop unit 200 (described later), the proximity detector may be configured to detect a separation between the bottom shelf 130 and an uppermost surface of the worktop.

Additionally or alternatively, the sensor may comprise a gyroscope (not shown) configured to detect an acceleration of the shelving unit 120. For example, the sensor may be configured to detect a sudden deceleration of the shelving unit 120, which may be indicative of a collision.

Additionally or alternatively, the wall cabinet 100 may be in communication with (e.g. comprise) a further sensor configured to determine a status of the door of the cabinet 100. For example, the wall cabinet 100 may comprise a further sensor. The further sensor may be configured to determine whether the door 118 is either open, closed, or in a position therebetween. As will be described below, the status of the door 118 may be taken into account when controlling the wall unit 100.

The wall unit 100 may be in communication with a controller. For example, the wall unit 100 may comprise a controller. The controller may control the operation of the actuator means 150 and the motion of the shelving unit 120.

In use, the shelving unit 120 is movable between the first position and the second position. For example, the shelving unit 120 is continuously movable between the first position and the second position, such that a user may move the shelving unit 120 only as far beneath the carcass 110 as is required (e.g., to access the bottom shelf 130 only).

The shelving unit 120 may be controlled according to a determination or detection made by one or more of the or each sensor.

The shelving unit may be movable between the first and second positions according to a status or position of the door 118. For example, the shelving unit 120 may be movable towards the second position (e.g. from the first position to the second position) regardless of whether the door 118 is in an open position. However, the shelving unit 120 may be movable towards the first position (e.g. from the second position to the first position) only when the door 118 is in an open position (e.g. a full open position perpendicular to the wall upon which the cabinet 100 is installed).

The shelving unit 120 may be movable towards the second position to an extent that the shelving unit 120 does not collide with its surroundings. For example, responsive to a determination of a distance or separation between a bottom of the shelving unit 120 and an object within the travel span of the shelving unit 120, the shelving unit 120 may be movable by a distance marginally short of the determined separation between the shelving unit 120 and the object.

The motion of the shelving unit 120 may be controlled according to the detection of a sudden or unexpected deceleration. For example, upon detecting a sudden deceleration of the shelving unit 120, e.g. by a gyroscope or similar sensor, the shelving unit 120 may be configured to reverse its direction of motion, e.g. for one second, before stopping.

The actuator 152 may be controlled remotely, for example using a remote control device. A user may issue an "open" or "down" command once in order to command the actuator to move the shelving unit 120 from the first position to the second position. However, a user may have to press or hold an "up" or "close" command in order to return the shelving unit towards the first position (e.g. from the second position).

Additionally or alternatively, the actuator 152 may be controlled by voice control. For example, a user of the wall cabinet 100 may say a command word in order to control the operation of the actuator.

The wall cabinet 100, specifically the carcass 110, may be installed on a wall of a kitchen at the height of a typical wall cabinet (e.g. a non-movable or fixed height cabinet). This may allow a standing user to use the wall cabinet 100 in the first position, e.g. by opening and closing the door 118.

The travel span of the actuator means 152 may be selected such that in the second position the shelving unit 120 may be reached and used by a seated user (e.g. a wheelchair user).

The wall cabinet 100 may be installed above a height-adjustable worktop unit 200. The controller may be capable of controlling both the wall cabinet 100 and the height-adjustable worktop unit 200.

### Worktop Unit

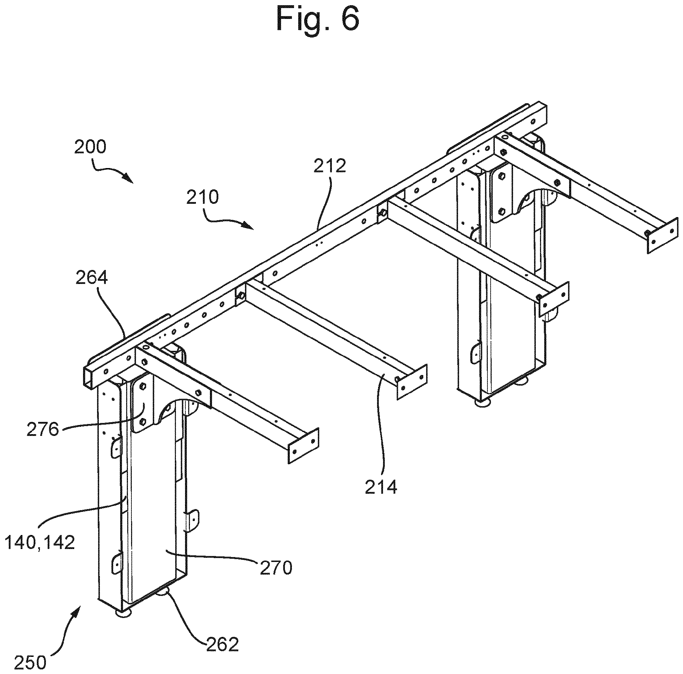

With reference to Figs. 6, 7, 8A and 8B, a worktop unit 200 for a kitchen is described. The worktop unit 200 comprises a frame 210 and legs 250 configured to support the frame 210.

The frame 210 is configured to support a worksurface (not shown). For example, the worksurface may be a wooden or quartz surface upon which kitchen activities (e.g. food preparation) may be performed, upon which kitchen appliances (e.g. a microwave oven) may be kept, or within which kitchen appliances may be installed (e.g. sink, hob).

The frame 210 comprises a support bar 212 and support struts 214. The support bar 212 extends along a width of the worktop unit 200 e.g. from a first leg 250 to a second leg 250. The struts 214 extend perpendicularly from the bar 212 and are spaced apart along a length of the bar 212, such that the bar 212 and the struts 214 together define the frame 210. In particular, the bar 212 and the struts 214 together define a substantially planar upper surface upon which a worksurface may be supported and secured. In an installed configuration, the frame 210 is configured to support a worksurface in a horizontal plane such that it is "level" for a user.

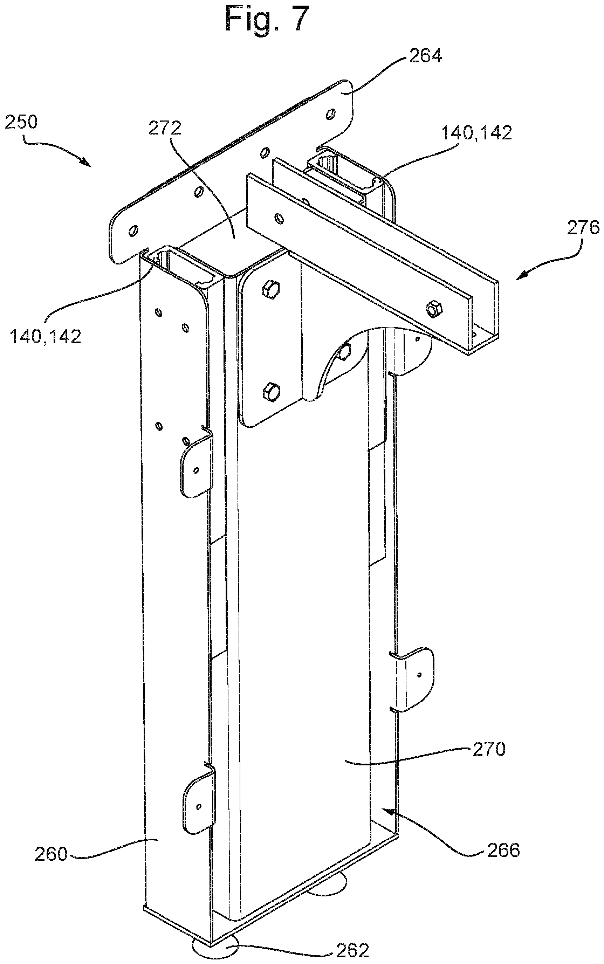

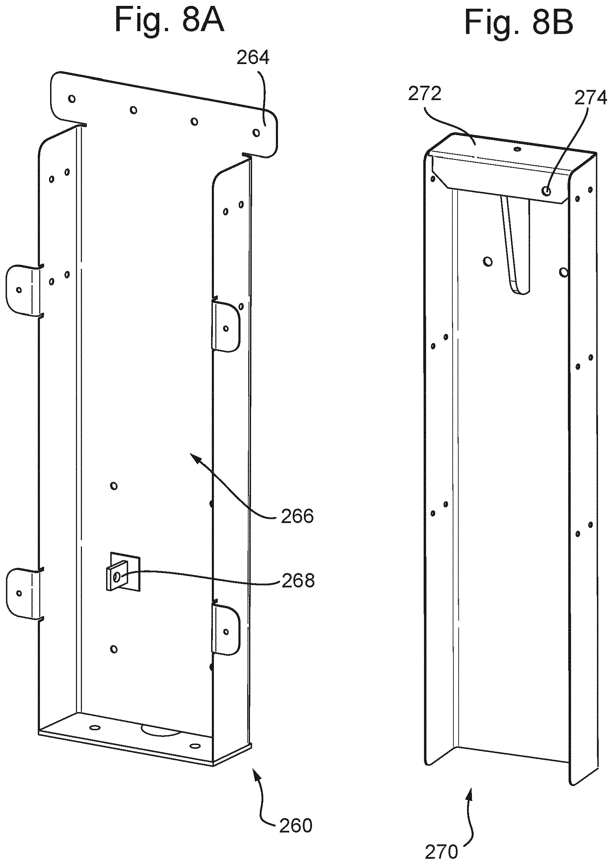

The legs 250 are shown in greater detail in Fig. 7. Each leg 250 comprises a housing 260 (Fig. 8A) having feet 262 for supporting the legs 250 on a floor. The legs 250 are fixable to a wall by means of attachment flange 264 provided towards (e.g. at) an upper end of the leg 250. Accordingly, the legs 250 are supported on the floor by feet 262 and prevented from toppling or rotating by attachment flange 264.

The housing 260 comprises a channel 266 extending longitudinally along the leg 250 such that the channel 266 is provided, in an installed configuration, vertically. Within the channel 266 of the housing 260 is provided an attachment point 268 (Fig. 8A) configured to provide an anchor point for an actuator means, such as the actuator 152 (described above).

The legs 250 additionally comprise a slide channel assembly 270 (Fig. 8B) for moving the frame 210 relative to the legs 250. The slide channel assembly 270 is receivable within the channel 266 of the housing 260. In order to aid understanding, the slide channel assembly 270 is shown in Fig. 8B in a reverse orientation to that shown in Figs. 6 and 7.

The slide channel assembly 270 comprises, at an upper end, a support surface 272 upon which support bar 212 may be supported and secured. On a flange extending downwardly from an underside of support surface 272 is provided an attachment point 274. The attachment point 274 is configured to engage (e.g. receive) an actuator means such that the actuator means may act on the slide channel assembly 270 by means of attachment point 274. Accordingly, support surface 272 and attachment point 274 are rigidly attached to the slide channel assembly 270.

The slide channel assembly 270 additionally comprises a slide mechanism, such as slide rails 140, 142 described above. As shown in Fig. 7, a pair of slide rails 140, 142 is provided within the channel 266 at each side of the slide channel assembly 270. One of the rails 140, 142 is provided on an internal surface of the channel 266, and the other of the rails 140, 142 is provided on an opposing surface of the slide channel assembly 270. The rails 140, 142 are configured to support and guide the slide channel assembly 270 as it moves the frame 210 from the first position to the second position. For example, the slide rails 140, 142 may be configured to maintain the slide channel assembly 270 sliding in a vertical plane in an installed configuration.

At an upper end of slide channel assembly 270 is provided a bracket 276 (Fig. 7). The bracket is configured to receive and secure a support strut 214 to the slide mechanism 270. The bracket 276 thereby provides support to a worksurface as the frame 210 is raised and lowered.

The leg 250 additionally comprises an actuator mechanism, such as linear motorised actuator 152 described above. The actuator mechanism is configured to move the frame 210 between the first position (Figs. 6 and 7) and a second position 250 in which the slide channel assembly 270 is raised above the housing 260.

The actuator 152 may be attached at a first end (e.g. at the body 154) to the attachment point 268. At a second end (e.g. at the arm 156), the actuator 152 may be attached at the attachment point 274 (e.g. only at the attachment point 274). Accordingly, the actuator is anchored on the housing 260, such that actuation of the actuator acts to move the slide channel assembly 270 relative to the feet 262 of the housing 260.

Figs. 6 and 7 show the worktop unit 200 in the first position, in which the slide mechanism 270 is in a maximally retracted position. The support surface 272 of the slide mechanism 270 thereby sits flush with the top of the housing 260, such that a support bar 212, when received on the support surface 272, will rest upon the top of the housing 260. Accordingly, in the first position the support bar 212 is in direct contact with the housing 260, which comprises feet 262 in direct contact with the floor.

In the second position, the slide channel assembly 270 is raised above the housing 260 such that, by means of support surface 272, the frame 210 is raised above the housing 260.

In use, the actuator 152 may be actuated so as to move the frame 210 relative to the legs 250. In particular, the actuator 152 may be actuated in order to move the slide channel assembly 270 relative to the housing 260, such that the frame 210 supported by the slide channel assembly 270 is moved relative to a floor on which the legs 250 are provided.

The actuator may comprise a travel span of up to 880 mm. The worktop unit 200 may have a width of 1.5 m, 2.0 m or 2.5 m.

When the worktop unit 200 comprises two or more legs 250, each leg may comprise an actuator 152. The actuators 152 may be configured to move the frame 210 between the first position and the second position in a coordinated manner, such that the frame 210 stays level or horizontal during movement in a vertical direction.

When the worktop unit 200 comprises two legs 250, the legs may be provided at opposite ends of the worktop unit 200, e.g. as shown in Fig. 6. For example, the leg(s) 250 may be provided at the back or side(s) of the worktop unit 250, such that a large space under the frame 210 and worksurface is provided, e.g. for wheelchair or otherwise seated users.

When provided at the back of the worktop unit 200, the legs 250 may occupy substantially the same plane, particularly the same vertical plane in an installed configuration. Accordingly, when the leg(s) is provided at the back of the worktop unit 200, the worktop unit 200 may have a cross section comprising an inverted L, which may otherwise topple if not for the attachment flange 264 of the housing 260 being secured to a wall.

The worktop unit 200 may comprise a sensor (e.g. a plurality of sensors), the outputs of which may be used during operation of the worktop unit 200.

The sensor may be provided under the frame 210 in order to detect an environment of the worktop unit 200 beneath the frame. The sensor may comprise a proximity detector. The sensor may be configured to determine a separation between an underside of the frame 210 and an object provided beneath the frame 210.

Additionally or alternatively, the worktop unit 200 may comprise a sensor provided on an upper surface of the worksurface. The sensor may comprise a proximity detector. The sensor may be configured to determine a separation between an upper surface of the worktop unit 200 (e.g. a worksurface thereof) and an object provided above the worktop unit 200.

Additionally or alternatively, the worktop unit 200 may comprise a sensor configured to detect an acceleration of the frame 210. The sensor may comprise a gyroscope, located on the frame 210. The sensor may be configured to determine whether the frame 210 has contacted an object. For example, the sensor may be configured to detect a sudden deceleration.

### Method

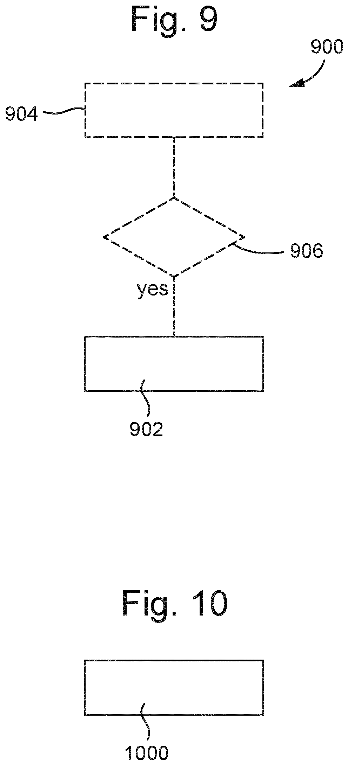

With reference to Fig. 9, a method 900 of controlling an item of height-adjustable furniture is described. The item of height-adjustable furniture may be a wall cabinet 100, or a worktop unit 200. The method 900 comprises 902 moving the item of height-adjustable furniture between the first position and the second position.

The method 900 may additionally comprise 904 receiving a signal from a sensor. The method may additionally comprise 906 determining whether a move condition is satisfied.

When the item of height-adjustable furniture comprises the worktop unit 200, the method 900 may comprise moving the worktop unit 200 from the first position to second position or from the second position to the first position. The method 900 may further comprise receiving a signal from a sensor describing a separation between the frame 210 and an object in the environment of the worktop unit 200. The method may comprise determining whether the separation is greater than a remaining travel span.

The method 900 may comprise detecting a deceleration of the item of furniture, for example, a sudden or unexpected deceleration. For example, a gyroscope may detect a sudden deceleration of the wall cabinet 100 during movement towards the second position. This may signify that, during motion, the item of furniture has contacted an object. In response, the method may comprise reversing the direction of travel of the item of furniture e.g. for one second. This may reduce the force of any contact or impact.

The method 900 may comprise determining a distance to an object provided beneath or above the item of furniture, and moving the item of furniture (e.g. towards the second position) to an extent that the item of furniture does not collide with the object. For example, the method may comprise moving the item of furniture marginally short of the determined distance to the object. When a user is seated below worksurface of a worktop unit 200, this may allow the worksurface to be lowered to a convenient height for the user.

The method 900 may be a method of controlling at least one item (e.g. two items) of height-adjustable furniture, when provided and installed with overlapping travel spans (e.g. when a wall cabinet 100 and a worktop unit 200 are installed above and below one another) or nearly overlapping travel spans.

When the wall cabinet 100 is provided above a worktop unit 200 which is also vertically movable, then the wall cabinet 100 and the worktop unit 200 may have travel spans which are capable of overlapping, such that in certain configurations, the items may be capable of colliding. For example, a most elevated position of the frame 210 may be of greater elevation than the least elevated position of the shelving unit of the wall cabinet 100. Alternatively, the wall cabinet 100 and the worktop unit 200 may have travel spans which do not overlap or coincide, but which are close together (e.g. 10 mm) such that an object placed upon the worktop unit 200 may be capable of interacting with the wall cabinet 100 in certain configurations of the worktop unit 200 and the wall cabinet 100.

The method may thereby comprise determining the position of each of the items of furniture having overlapping or nearly overlapping travel spans.

The method 900 may allow the item of height-adjustable furniture to intelligently respond to its environment so as to provide improved ease and safety of use.

### Controller

Fig. 10 shows a controller 1000 which is configured to control an item of height-adjustable furniture (e.g. a plurality of items of height-adjustable furniture). The controller 1000 may be configured to perform the method 900. The item of height-adjustable furniture (e.g. the wall cabinet 100 and/or the worktop unit 200) may be in communication with the controller 1000. Additionally or alternatively, the wall cabinet 100 and/or the worktop unit 200 may comprise the controller 1000.

Where a worktop unit 200 and a wall cabinet 100 are provided above and below one another, the worktop unit 200 and the wall cabinet 100 may be in communication with the same controller 1000. The controller 1000 may be configured to control the operation of the wall cabinet 100 and the worktop unit 200, e.g. such that the two items of furniture do not collide.

Additionally or alternatively, the controller 1000 may be configured to control the items of furniture in a concerted or coordinated manner. For example, the controller 1000 may be configured to move the worktop unit 200 and the wall cabinet 100 to particular positions (e.g. first and second positions respectively) such that the items of furniture are more easily accessibly for a wheelchair user. This may be achieved by means of only a single user-issued command. The user may thereby issue a "down" command to both items of furniture, and both items of furniture are lowered to a least elevated position.

The following additional, numbered statements of invention are also included within the specification and form part of the present disclosure:
Statement 1. A method of controlling a worktop unit, the worktop unit comprising: a frame configured to support a worksurface; and a leg configured to support the frame, wherein the frame is movable relative to the leg between: a first position; and a second position having a greater elevation than the first position, the method comprising: determining whether a safety condition is satisfied, the safety condition being a condition for avoiding collision between the worktop unit and its environment; and if the safety condition is satisfied, moving the frame between the first position and the second position.
Statement 2. The method of statement 1, wherein the method comprises: receiving an instruction to move the frame towards the first position; determining a position of the frame so as to determine a remaining travel span towards the first position; and receiving a signal from a sensor describing a separation between an underside of the frame and an object provided beneath the frame.
Statement 3. The method of statement 2, wherein if it is determined that the separation between the underside of the frame and the object provided beneath the frame is greater than the remaining travel span towards the first position, the method comprises moving the frame towards the first position.
Statement 4. The method of statement 3, wherein the instruction is an instruction to move the frame to the first position, and the method comprises moving the frame to the first position.
Statement 5. The method of statement 2, wherein if it is determined that the separation between the underside of the frame and the object provided beneath the frame is less than the remaining travel span towards the first position, the method comprises moving the frame towards the first position to an extent that the frame does not contact the object.
Statement 6. The method of statement 5, wherein the instruction is an instruction to move the frame to the first position, and the method comprises moving the frame towards the first position.
Statement 7. The method of statement 1, wherein the method comprises: receiving an instruction to move the frame towards the second position; determining a position of the frame so as to determine a remaining travel span towards the second position; and determining a separation between an upper surface of the worktop unit and an object provided above the worktop unit.
Statement 8. The method of statement 7, wherein if it is determined that the separation between the upper surface of the worktop unit and the object provided above the worktop is greater than the remaining travel span towards the second position, the method comprises moving the frame towards the second position.
Statement 9. The method of statement 8, wherein the instruction is an instruction to move the frame to the second position, and the method comprises moving the frame to the second position.
Statement 10. The method of statement 7, wherein if it is determined that the separation between the upper surface of the worktop and the object provided above the worktop is less than the remaining travel span towards the second position, the method comprises moving the frame towards the second position to an extent that the frame does not contact the object.
Statement 11. The method of any of statements 7 to 10, wherein determining a separation between an upper surface of the worktop unit and an object provided above the worktop unit comprises receiving a signal from a sensor describing a separation between an upper surface of the worktop unit and an object provided above the worktop unit.
Statement 12. The method of any preceding statement, wherein the method is a method of controlling the worktop unit and a height-adjustable wall cabinet, the worktop unit being installed beneath the wall cabinet such that the worktop unit and the wall cabinet have overlapping travel spans.
Statement 13. The method of statement 12, wherein the method comprises receiving an instruction to move one of the wall cabinet and the worktop unit between a first position and a second position, and: receiving a signal describing a position of the other of the wall cabinet and the worktop unit; and/or determining a position of the other of the wall cabinet and the worktop unit; and/or moving the other of the wall cabinet and the worktop unit.
Statement 14. The method of statement 12 when dependent upon statement 7, wherein determining a separation between an upper surface of the worktop unit and an object provided above the worktop unit comprises receiving a signal describing a position of the wall cabinet.
Statement 15. The method of statement 12, wherein the method comprises: receiving an instruction to move the worktop unit and the wall cabinet in a same direction; and moving both the worktop unit and the wall cabinet at same rate in the same direction.
Statement 16. The method of statement 12 when dependent upon statement 10, wherein if it is determined that the separation between the upper surface of the worktop and the wall cabinet is less than the remaining travel span towards the second position, the method comprises moving the wall cabinet away from the worktop unit.
Statement 17. The method of statement 12 when dependent on statement 1, wherein the method comprises: receiving an instruction to move the wall cabinet towards the worktop unit; determining a position of the wall cabinet so as to determine a remaining travel span towards the worktop unit; determining a separation between an upper surface of the worktop unit and a lower surface of the wall cabinet; and wherein if it is determined that the separation between the upper surface of the worktop and the lower surface of the wall cabinet is less than the remaining travel span towards the worktop unit, the method comprises: moving the worktop unit away from the wall cabinet; and/or moving the wall cabinet towards the worktop unit.
Statement 18. A controller for controlling a worktop unit, the controller being configured to perform the method of any of statements 1 to 17.
Statement 19. A worktop unit for a kitchen, the worktop unit comprising: a frame configured to support a worksurface; and a leg configured to support the frame, wherein the frame is movable relative to the leg between: a first position; and a second position having a greater elevation than the first position.
Statement 20. A kitchen furniture suite comprising the worktop unit according to statement 19.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A method of controlling a worktop unit, the worktop unit comprising:
a frame configured to support a worksurface; and
a leg configured to support the frame,
wherein the frame is movable relative to the leg between:
a first position; and
a second position having a greater elevation than the first position,
wherein the worktop unit further comprises:
a sensor configured to detect an environment beneath the worktop unit; and/or
a sensor configured to detect an acceleration of the frame,
the method comprising:
determining whether a safety condition is satisfied, the safety condition being:
a condition for avoiding collision between the worktop unit and its environment; or
a crush condition; and
if the safety condition is satisfied, moving the frame between the first position and the second position.

2. The method of claim 1, wherein the method comprises:
receiving an instruction to move the frame towards the first position;
determining a position of the frame so as to determine a remaining travel span towards the first position; and
receiving a signal from a sensor describing a separation between an underside of the frame and an object provided beneath the frame.

3. The method of claim 2, wherein if it is determined that the separation between the underside of the frame and the object provided beneath the frame is greater than the remaining travel span towards the first position, the method comprises:
moving the frame towards the first position; or.
moving the frame to the first position.

4. The method of claim 2, wherein if it is determined that the separation between the underside of the frame and the object provided beneath the frame is less than the remaining travel span towards the first position, the method comprises moving the frame towards the first position to an extent that the frame does not contact the object.

5. A controller for controlling a worktop unit, the controller being configured to perform the method of any of claims 1 to 4.

6. A worktop unit for a kitchen, the worktop unit comprising:
a frame configured to support a worksurface; and
a leg configured to support the frame,
wherein the frame is movable relative to the leg between:
a first position; and
a second position having a greater elevation than the first position,
wherein the worktop unit further comprises:
a sensor configured to detect an environment beneath the worktop unit; and/or
a sensor configured to detect an acceleration of the frame.

7. The worktop unit of claim 6, wherein in the first position, the frame rests upon a housing of the leg, and in the second position the frame is elevated above the housing of the leg.

8. The worktop unit of claims 6 or 7, wherein the leg comprises a housing for housing an actuator mechanism, the actuator mechanism configured to move the frame relative to the housing, optionally wherein the actuator mechanism comprises a slide mechanism configured to slide within a channel of the housing.

9. The worktop unit of claim 8, wherein the actuator mechanism comprises an actuator, the actuator being anchored at a first end to an attachment point of the housing and at a second end to an attachment point of the slide mechanism.

10. The worktop unit of any of claims 6 to 9, wherein the housing is fixable to a wall and optionally providable on a floor.

11. The worktop unit of any of claims 6 to 10, wherein the leg extends in a first plane and the frame extends in a perpendicular plane, preferably wherein in an installed configuration, the leg extends in a vertical plane and the frame extends in a horizontal plane.

12. The worktop unit of any of claims 6 to 11, wherein the worktop unit comprises a plurality of legs, optionally wherein the legs are coplanar.

13. The worktop unit of any of claims 6 to 12, wherein the sensor configured to detect an environment beneath the worktop unit is configured to determine a separation between an underside of the frame and an object beneath the worktop unit.

14. The worktop unit of any of claims 6 to 13, comprising the controller of claim 5.

15. A kitchen furniture suite comprising the worktop unit of any of claims 6 to 14.
